# EUROPEAN PATENT APPLICATION

(11) **EP 4 765 388 A1**
(43) Date of publication of application: **24.06.2026**
(21) Application number: 24221233.0
(22) Date of filing: 18.12.2024
(51) Int. Cl.: H01M 50/207, H01M 50/224, H01M 50/242, H01M 50/249

(54) **CARRIER FRAMEWORK, BATTERY PACK INCLUDING THE CARRIER FRAMEWORK, AND ELECTRIC VEHICLE INCLUDING THE BATTERY PACK**

(71) Applicant: SAMSUNG SDI CO., LTD., Yongin-si, Gyeonggi-do 17084 (KR)
(72) Inventor: Floh, Guenter, 8052 Graz (AT)
(74) Representative: Gulde & Partner

(57) **Abstract**

The present disclosure refers to a carrier framework (100) for a battery pack of an electric vehicle, the carrier framework (100) including a frame (10) including two pairs of opposing side beams (12A, 12B, 14A, 14B); at least one cross beam (20A, 20B) connecting two opposing side beams (12A, 12B) of the frame (10); and a stiffening beam (50) being fixed to the two other opposing side beams (14A, 14B) of the frame (10) and to the at least one cross beam (20A, 20B).

## Description

### Field of the Disclosure

The present disclosure relates to a carrier framework, a battery pack including the carrier framework, and an electric vehicle including the battery pack.

### Technological Background

A battery module is formed of a plurality of battery cells connected in series or in parallel. That is, the battery module is formed by interconnecting the electrode terminals of the plurality of battery cells depending on a required amount of power and in order to realize a high-power rechargeable battery.

Battery modules can be constructed in either a block design or in a modular design. In the block design each battery cell is coupled to a common current collector structure and a common battery management system and the unit thereof is arranged in a housing. In the modular design, pluralities of battery cells are connected together to form submodules and several submodules are connected together to form the battery module. In automotive applications, battery systems generally include a plurality of battery modules connected in series for providing a desired voltage.

A battery pack is a set of any number of (for example identical) battery modules or single battery cells. The battery modules, respectively battery cells, may be configured in a series, parallel or a mixture of both to deliver the desired voltage, capacity, and/or power density. Components of a battery pack include the individual battery modules, and the interconnects, which provide electrical conductivity between the battery modules.

The mechanical integration of a battery pack requires appropriate mechanical connections between the individual components, e.g. of battery modules, and between them and a supporting structure of the vehicle. These connections must remain functional and save during the average service life of the battery system. Further, installation space and interchangeability requirements must be met, especially in mobile applications.

Mechanical integration of battery modules may be achieved by providing a carrier framework and by positioning the battery modules thereon. Fixing the battery cells or battery modules may be achieved by fitted depressions in the framework or by mechanical interconnectors such as bolts or screws. Alternatively, the battery modules are confined by fastening side plates to lateral sides of the carrier framework. Further, cover plates may be fixed atop and below the battery modules.

The carrier framework of the battery pack is mounted to a carrying structure of the vehicle. In case the battery pack shall be fixed at the bottom of the vehicle, the mechanical connection may be established from the bottom side by for example bolts passing through the carrier framework of the battery pack. The framework is usually made of aluminum or an aluminum alloy to lower the total weight of the construction.

Battery systems according to the prior art, despite any modular structure, usually include a battery housing that serves as enclosure to seal the battery system against the environment and provides structural protection of the battery system's components. Housed battery systems are usually mounted as a whole into their application environment, e.g. an electric vehicle. Thus, the replacement of defect system parts, e.g. a defect battery submodule, requires dismounting the whole battery system and removal of its housing first. Even defects of small and/or cheap system parts might then lead to dismounting and replacement of the complete battery system and its separate repair. As high-capacity battery systems are expensive, large and heavy, said procedure proves burdensome and the storage, e.g. in the mechanic's workshop, of the bulky battery systems becomes difficult.

In all automotive parts the stiffness and the frequency reduction are important topics. However, in extra-large battery-packs these issues become more prominent. Extra-large batteries need to overcome the structural problems they face due to their length and width. A particular problem in the development of EV batteries is the achievement of sufficient stiffness in the pack as well as the suppression of certain frequencies that could turn out problematic in the long-term usage.

Accordingly, the object of the present invention lies in further stiffening a carrier framework for a battery pack of an electric vehicle.

### Summary of Invention

The invention is defined by the appended claims. The description that follows is subjected to this limitation. Any disclosure lying outside the scope of said claims is only intended for illustrative as well as comparative purposes.

According to one aspect of the present disclosure, a carrier framework for a battery pack of an electric vehicle includes a frame including two pairs of opposing side beams; at least one cross beam connecting two opposing side beams of the frame; and a stiffening beam being fixed to the two other opposing side beams of the frame and to the at least one cross beam.

According to another aspect of the present disclosure, a battery pack includes the carrier framework according to any one of the preceding claims.

Yet another aspect of the present disclosure refers to an electric vehicle including the battery pack.

Further aspects of the present disclosure could be learned from the dependent claims or the following description.

### Brief Description of the Drawings

Features will become apparent to those of ordinary skill in the art by describing in detail exemplary embodiments with reference to the attached drawings in which:
- Fig. 1: illustrates a schematic perspective view from a bottom of a carrier framework according to an embodiment.
- Fig. 2: illustrates a schematic perspective view of a stiffening beam according to an embodiment.
- Fig. 3: illustrates a schematic perspective view of a stiffening beam according to the same embodiment from another perspective.
- Fig. 4: illustrates a schematic cross-sectional view of a stiffening beam according to the same embodiment along line A - A'.
- Fig. 5: illustrates a schematic cross-sectional view of a stiffening beam according to another embodiment along line B - B'.
- Fig. 6: illustrates a schematic view of an electric vehicle according to an embodiment.

### Detailed Description of the Invention

Reference will now be made in detail to embodiments, examples of which are illustrated in the accompanying drawings. Effects and features of the exemplary embodiments will be described with reference to the accompanying drawings. In the drawings, like reference numerals denote like elements, and redundant descriptions are omitted.

In the drawings, the relative sizes of elements, layers, and regions may be exaggerated for clarity.

As used herein, the term "and/or" includes any and all combinations of one or more of the associated listed items. Further, the use of "may" when describing embodiments of the present disclosure refers to "one or more embodiments of the present disclosure." In the following description of embodiments of the present disclosure, the terms of a singular form may include plural forms unless the context clearly indicates otherwise.

It will be understood that although the terms "first" and "second" are used to describe various elements, these elements should not be limited by these terms. These terms are only used to distinguish one element from another element. For example, a first element may be named a second element and, similarly, a second element may be named a first element, without departing from the scope of the present disclosure.

It will also be understood that when an element is referred to as being "above" or "on" another element, it can be directly on the element, or intervening elements may also be present.

Herein, the terms "upper" and "lower" are defined according to the z-axis. For example, the upper cover is positioned at the upper part of the z-axis, whereas the lower cover is positioned at the lower part thereof. In the drawings, the sizes of elements may be exaggerated for clarity. For example, in the drawings, the size or thickness of each element may be arbitrarily shown for illustrative purposes, and thus the embodiments of the present disclosure should not be construed as being limited thereto.

Unless otherwise defined, all terms (including technical and scientific terms) used herein have the same meaning as commonly understood by one of ordinary skill in the art to which the present disclosure belongs. It will be further understood that terms, such as those defined in commonly used dictionaries, should be interpreted as having a meaning that is consistent with their meaning in the context of the relevant art and/or the present specification, and should not be interpreted in an idealized or overly formal sense, unless expressly so defined herein.

### General Concept

According to one aspect of the present disclosure, a carrier framework for a battery pack of an electric vehicle includes the following. Firstly, a frame including two pairs of opposing side beams. Further, at least one cross beam connecting two opposing side beams of the frame is included. Additionally, a stiffening beam is fixed to the two other opposing side beams of the frame and to the at least one cross beam.

The stiffening beam provides additional strength for the carrier framework. That is, the arrangement of the stiffening beam increases the overall stiffness while not reducing the volumetric energy density of the battery pack. Thereby, the resonance frequency of the carrier framework may also be adjusted. This yields the positive effect that vibrations at frequencies which may damage a battery pack to which the carrier framework is installed can be avoided. In other words, the design of the carrier framework may be such that possibly damaging resonance frequencies are shifted to other frequencies, thereby prolonging the life cycle of the carrier framework. In addition, the stiffening beam dampens the oscillating behavior of the battery pack and reduces inherent frequencies.

According to another embodiment, the stiffening beam further includes first through holes through which the stiffening beam is fixed to the at least one cross beam. The stiffening beam and the cross beam may be connected by fixing means (e.g., screw) through the first through hole, thereby allowing a firm connection between both members. Further, resonance frequencies may be transferred efficiently, thereby adjusting the resonance frequency of the whole carrier framework.

According to another embodiment, the carrier framework further includes bottom plates extending between the at least one cross beam and the side beams, the bottom plates being fixed to the stiffening beam. The bottom plates may carry the batteries, or respectively battery modules. The bottom plates may cover the whole area between the two pairs of opposing side beams. A bottom plate may be fixed to a cross beam. The bottom plates may have a different length. Optionally, the bottom plates may be connected to each other in a form-fitting manner and/or a force-fitting manner.

According to another embodiment, the bottom plates have structural elements on a side facing the stiffening beam, which protrude from the plane of the bottom plates and rest against the stiffening beam. The structural element may function to provide stiffness to the bottom plate. Stiffness may relate to bending stiffness and/or torsional stiffness. By resting against the stiffening beam, the overall stiffness of the carrier framework is further increased, thereby further altering the resonance frequency.

According to another embodiment, the stiffening beam includes second through holes in an area not facing the structural elements of the bottom plates and bushings that attach to the second through holes and extend to the bottom plate. The stiffing beam may be fixed to the bottom plate via the bushing. Fixing the bottom plate to the stiffening beam further strengthens the carrier framework. The bushings may be fixed to the stiffing beam in a form-fitting manner and/or a force-fitting manner and/or a materially bonded manner.

According to another embodiment, the structural elements are provided with a U-shaped contour on the side facing the stiffening beam, the U-shaped contour running transversely to the stiffening beam. A U-shaped contour represents another option for stiffening the bottom plate. A U-shape has the advantage of being easily manufacturable by bending the edges of a sheet metal and arranging them next to each other, thereby yielding a flat surface on one side and several U-shapes arranged next to each other on the other side.

According to another embodiment, the stiffening beam has a hollow profile. The hollow profile has a high stiffness while maintaining low weight, compared to a solid beam which may have a similar rigidity but is much heavier. Low weight is a big advantage for electric vehicles.

According to another embodiment, the hollow profile includes at least two hollow chambers. When openings are present in one hollow chamber, this location may be weakened. In this case, the second hollow chamber may still provide rigid support in this weakened area.

According to another embodiment, the stiffening beam further includes a wall between two of the at least two hollow chambers. Due to the wall, even if one hollow chamber includes a hole, the other chamber still maintains a square unobstructed profile, thereby maintaining rigidity of the stiffening beam.

According to another embodiment, the stiffening beam is made of aluminum. Aluminum is light weight and suitable for electric vehicle applications.

According to another aspect, a battery pack of an electric vehicle includes the carrier framework according to any one of the preceding claims.

Finally, an electric vehicle may include the battery pack. The electric vehicle may further include an underrun protection cover, wherein the stiffening beam is arranged between the underrun protection cover and the bottom plates. When an underrun protection cover is present, there may be a space between the carrier framework and the underrun protection cover. The stiffening beam may fill a gap corresponding to the space and provide stiffening for the carrier framework, without requiring an increase of the gap. That is, an additional space may not be required for the installation of the stiffening beam.

According to another embodiment, a resonance frequency of the battery pack is between 45 and 49 Hz. Alternatively, the resonance frequency is between 45 and 48 Hz. In some embodiments, the resonance frequency is between 45.5 and 47 Hz. These frequency ranges are uncommon to be achieved in electric vehicles, thereby avoiding amplified vibrations. This reduces the burden on the battery pack and thereby on the electric vehicle over a life-cycle, thereby prolonging the life-cycle.

### Specific Embodiments

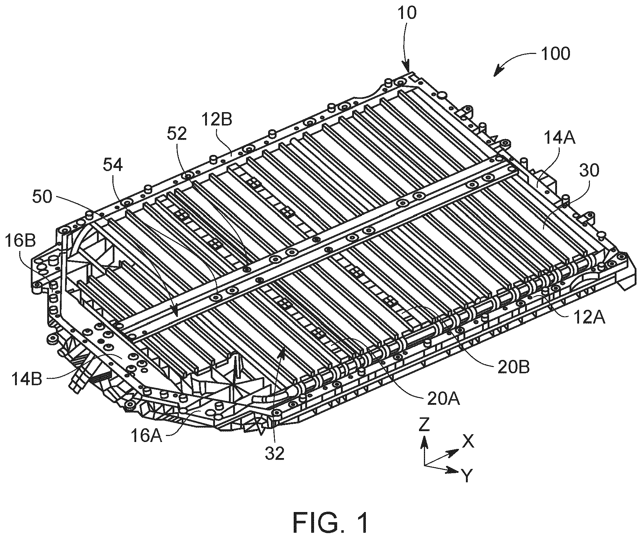

Fig. 1 is a schematic perspective view from a bottom of a carrier framework 100 according to an embodiment. The carrier framework 100 may be part of a battery pack and may accommodate battery cells.

The carrier framework 100 includes a frame 10 with a basic structure including two pairs of opposing side beams 12A, 12B, 14A, 14B. A first pair includes a first side beam 12A which extends along a longitudinal direction of the carrier framework 100. The longitudinal direction of the carrier framework 100 is the direction in which the carrier framework 100 has its largest extension. In Figure 1, this direction is indicated by the X-axis. The first pair further includes a second side beam 12B, which extends in parallel to the first side beam 12A. A second pair includes another first side beam 14A, which extends perpendicular to the longitudinal direction X, which may be referred to as a width direction of the carrier framework 100. In Figure 1, this direction is indicated by the Y-axis. Another second side beam 14B of the second pair extends in parallel to the first side beam 14A. According to the illustrated embodiment, the carrier framework 100 further includes a first angled beam 16A and a second angled beam 16B connecting the first side beam 12A and the second side beam 12B, respectively, to the second side beam 14B.

The carrier framework 100 further includes at least one cross beam 20A, 20B connecting two opposing side beams 12A, 12B of the carrier framework 100. In this embodiment, a first cross beam 20A and a second cross beam 20B are shown, extending between the first side beam 12A and the second side beam 12B. The cross beams 20A, 20B are fixed to the two opposing side beams 12A, 12B.

The carrier framework 100 further includes a stiffening beam 50 being fixed to the two other opposing side beams 14A, 14B of the frame 10 and to the cross beams 20A, 20B. The stiffening beam 50 includes first through holes 52 through which the stiffening beam 50 is fixed to the cross beams 20A, 20B. This embodiment shows two first through holes 52 for each cross beam 20 A, 20B, but is not limited thereto. For example, one, three, four or more first through holes are possible.

In this embodiment, the carrier framework 100 includes bottom plates 30 extending between the at least one cross beam 20A, 20B and the side beams 12A, 12B, 14A, 14B, the bottom plates 30 being fixed to the stiffening beam 50. Further, the bottom plates 30 include structural elements 32 on a side facing the stiffening beam 50, which protrude from the plane of the bottom plates 30 and rest against the stiffening beam 50. In this embodiment, the structural element 32 is implemented by a U-shaped contour on the side of the bottom plate 30 facing the stiffening beam 50, the U-shaped contour running transversely to the stiffening beam 50.

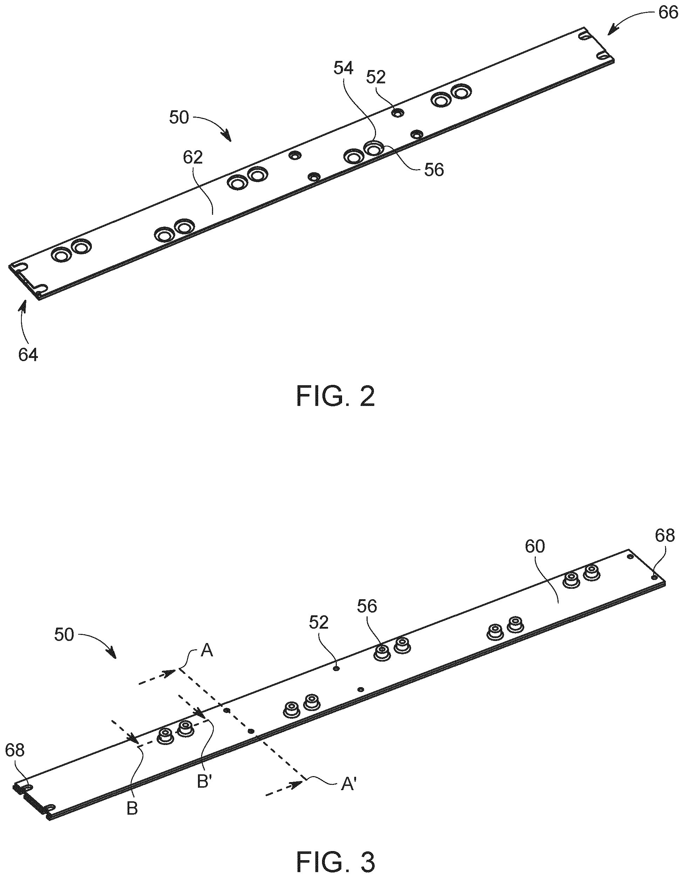

In this embodiment, the stiffening beam 50 further includes second through holes 54 in an area not facing the structural elements 32 of the bottom plates 30 and bushings 56 (not shown in Fig. 1; cf. Fig. 3 to 5) that attach to the second through holes 54 and extend to the bottom plate 30. In other words, the bushings 56 fill the distance between the stiffening beam 50 and the bottom plate 30, thereby allowing for a firm connection. That is, the stiffing beam 50 may be fixed to the bottom plate 30 via the bushing 56.

Fig. 2 illustrates a schematic perspective view of a stiffening beam 50 according to the embodiment of Fig. 1. The explanations regarding Fig. 1 apply accordingly. The stiffening beam 50 has two distal ends, that is, a first end 64 and a second end 66. Fig. 2 shows a lower surface 62 which would face away from the carrier framework 100, when the stiffening beam 50 is installed on the carrier framework 100. The lower surface 62 may be flat, that is, without protrusions beyond its surface.

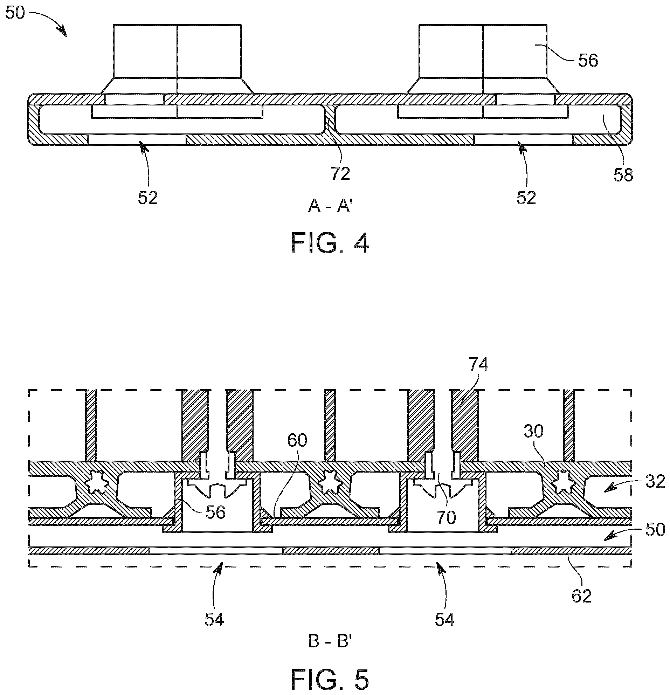

As will be explained in detail with regard to Fig. 4, the stiffening beam 50 may have a hollow profile. Accordingly, the first through holes 52 and the second through holes 54 may pass through an upper surface 60 (cf. Fig. 3) and the lower surface 62 of the stiffening beam 50, thereby forming an upper first through hole through the upper surface 60 and a lower first through hole through the lower surface 62. In the same manner, the second through holes 54 may pass through the upper surface 60 and the lower surface 62 of the stiffening beam 50, thereby forming an upper second through hole through the upper surface 60 and a lower second through hole through the lower surface 62.

The bushing 56, which is hollow in its center, passes through the upper second through hole and is fixed thereon. In other words, the hollow center of the bushing 56 extends the second through hole 54 from the lower surface 62 to a peripheral end of the bushing 56 facing away from the upper surface 60. The fixation of the bushing 56 may be realized in a form-fitting manner, in a force-fitting manner and/or in a materially bonded manner. In this embodiment, the bushing 56 is fixed in a form-fitting manner by inserting the bushing 56 from the lower surface 62 side through the lower second through hole. Therefore, the lower second through hole may be larger than the upper second through hole.

In this embodiment, the bushings 56 are arranged in pairs of two. Further, the pairs are alternately arranged and spaced apart from the center of the stiffening beam 50. This arrangement facilitates stiffening and resonance frequency adjustment. However, the bushings 56 may also be arranged in groups of three or more. Optionally, the bushings 56 may be arranged in one line. The line may be the center of the stiffening beam 50 or may be at a distance from the center of the stiffening beam 50.

Turning back to Fig. 1, it can be seen that the stiffening beam 50 may not be connected to all bottom plates 30. This also dampens the propagation of certain frequencies, which thereby may be suppressed.

Fig. 3 illustrates a schematic perspective view of the stiffening beam 50 according to the same embodiment of Fig. 2 but flipped by 180° along the first end 64. The explanations regarding Figs. 1 and 2 apply accordingly. From Fig. 3, it is visible that the bushings 56 extend perpendicularly from the upper surface 60 of the stiffening beam 50. The height of the bushings 56 may depend on the height of the structural element 32 of the bottom plate 30. In other words, the bushing 56 may be formed such that a firm connection between the stiffening beam 50 and the bottom plate 30 can be established. The stiffening beam 50 may further include third through holes 68 for a fixation to the side beams 12A, 12B. Fig. 3 further shows two broken lines which indicate a cross-sectional view along the line A - A' in Fig. 4 and along the line B - B' in Fig. 5, wherein the arrow close to the first letter indicates the viewing direction.

According to one embodiment, the width of the stiffening beam 50 may be more than 1/30 of the width of the carrier framework 100 (width is referring to the extension in Y-direction in Fig. 1). By adjusting the width of the stiffening beam 50 in relation to the overall width of the carrier framework 100 the stiffness of the carrier framework 100 can be flexibly adjusted, for example, adjusting to different classes of battery packs. For further increasing stiffness, the stiffening beam 50 may be more than 1/20 of the width of the carrier framework 100. Alternatively, the stiffening beam 50 may be more than 1/10 of the width of the carrier framework 100. Further alternatively, the width of the stiffening beam 50 may be selected such that a resonance frequency of the battery pack is equal to or more than 45 Hz.

Fig. 4 illustrates a schematic cross-sectional view of the stiffening beam 50 along line A-A' in Fig. 3. The explanations regarding Figs. 1 to 3 apply accordingly. The cross-sectional view shows that the stiffening beam 50 of this embodiment may be hollow. Optionally, the stiffening beam 50 may include a wall 72. In this nonlimiting embodiment, the wall 72 separates the hollow stiffening beam 50 into two hollow chambers 58, each extending in the longitudinal direction of the stiffening beam 50. A hollow chamber 58 allows for saving weight compared to a solid beam, while maintaining a high degree of rigidity. Further, by providing two hollow chambers 58, even if one chamber is provided with through holes, the other chamber may still maintain stiffness in this area. Therefore, the wall 72 provides the stiffening beam 50 with an even higher degree of stiffness with only minimal additional material use. The material used for the stiffening beam 50 may be a metal, such as aluminum.

Fig. 5 illustrates a schematic cross-sectional view of the stiffening beam 50 in Fig. 3 along line B - B'. The explanations regarding Figs. 1 to 4 apply accordingly. However, here, another embodiment is shown, that is, the structural element 32 has a different shape. That is, while the structural element 32 of the bottom plate 30 in Fig. 1 has a U-shaped contour, the structural element 32 of the bottom plate 30 in Fig. 5 is, when including the bottom plate 30, in its cross-section, X-shaped. In detail, the lower legs of the X shape are compressed such that a resting surface of the legs on the upper surface 60 of the stiffening beam 50 is enlarged. The middle of the x-shape is hollow. The hollow portion may, in its cross-section, be star-shaped. The structural element 32 extends along the longitudinal direction of the bottom plate 30. That is, the longitudinal direction of the bottom plate 30 is perpendicular to the longitudinal direction of the stiffening beam 50. The structural elements 32 may be formed such that, when two bottom plates 30 are arranged next to each other, a bushing 56 fits between both structural elements 32. When the stiffening beam 50 is fixed to the bottom plate 32, a fixing means 70 (e.g., screw) is inserted through the second through hole 54, that is, the lower second through hole and the upper second through hole, into a fixing structure 74.

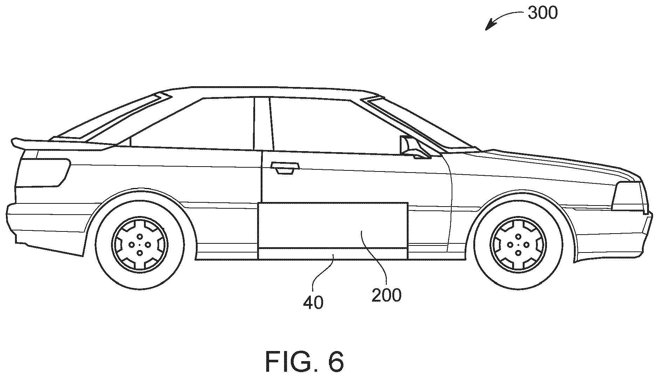

Besides the carrier framework 100 described above and the batteries accompanied therein, a battery pack 200 usually contains monitoring and control technology, temperature control units and the like. Fig. 6 illustrates a schematic view of an electric vehicle 300 including such a battery pack 200. The electric vehicle 300 may include an underrun protection cover 40. Then the stiffening beam 50 may be arranged between the underrun protection cover 40 and the bottom plates 30. This has the advantage that the space between the bottom plates 30 and the underrun protection cover 40 is used efficiently by the stiffening beam 50. That is, no additional space is require for the stiffening beam 50. In other words, the shape of the stiffening beam 50 may be selected such that no additional space is required below the carrier framework 100.

### Reference signs

- 10: frame
- 12A: first side beam along a first direction
- 12B: second side beam along a first direction
- 14A: first side beam along a second direction
- 14B: second side beam along a second direction
- 16A: first angled beam
- 16B: second angled beam
- 20A: first cross beam
- 20B: second cross beam
- 30: bottom plate
- 32: structural element
- 40: underrun protection cover
- 50: stiffening beam
- 52: first through hole
- 54: second through hole
- 56: bushing
- 58: hollow chamber
- 60: upper surface
- 62: lower surface
- 64: first end
- 66: second end
- 68: third through hole
- 70: fixing means
- 72: wall
- 74: fixing structure
- 100: carrier framework
- 200: battery pack
- 300: electric vehicle

## Claims

1. A carrier framework (100) for a battery pack, the carrier framework (100) comprising:
a frame (10) comprising two pairs of opposing side beams (12A, 12B, 14A, 14B);
at least one cross beam (20A, 20B) connecting two opposing side beams (12A, 12B) of the frame (10); and
a stiffening beam (50) being fixed to the two other opposing side beams (14A, 14B) of the frame (10) and to the at least one cross beam (20A, 20B).

2. The carrier framework (100) as claimed in claim 1, wherein the stiffening beam (50) further comprises first through holes (52) configured for fixing the stiffening beam (50) to the at least one cross beam (20A, 20B).

3. The carrier framework (100) as claimed in claim 1 or 2, further comprising bottom plates (30) extending between the at least one cross beam (20A, 20B) and the side beams (12A, 12B, 14A, 14B), the bottom plates (30) being fixed to the stiffening beam (50).

4. The carrier framework (100) as claimed in claim 3, wherein the bottom plates (30) have structural elements (32) on a side facing the stiffening beam (50), which protrude from the plane of the bottom plates (30) and rest against the stiffening beam (50).

5. The carrier framework (100) as claimed in claim 4, wherein the stiffening beam (50) comprises second through holes (54) in an area not facing the structural elements (32) of the bottom plates (30) and bushings (56) that attach to the second through holes (54) and extend to the bottom plate (30), and
wherein the stiffing beam (50) is fixed to the bottom plate (30) via the bushing (56).

6. The carrier framework (100) as claimed in any one of claims 3 to 5, wherein the structural elements (32) are provided with a U-shaped contour on the side facing the stiffening beam (50), the U-shaped contour running transversely to the stiffening beam (50).

7. The carrier framework (100) as claimed in any one of the preceding claims, wherein the stiffening beam (50) has a hollow profile.

8. The carrier framework (100) as claimed in any one of the preceding claim, wherein the hollow profile comprises at least two hollow chambers (58).

9. The carrier framework (100) as claimed in any one of the preceding claim, wherein the stiffening beam (50) further comprises a wall (72) between two of the at least two hollow chambers (58).

10. The carrier framework (100) as claimed in any one of the preceding claims, wherein the stiffening beam (50) is made of aluminum.

11. A battery pack (200) comprising the carrier framework (100) as claimed in any one of the preceding claims.

12. An electric vehicle (300) comprising the battery pack (200) of claim 11.

13. The electric vehicle (300) as claimed in claim 12, further comprising an underrun protection cover (40), wherein the stiffening beam (50) is arranged between the underrun protection cover (40) and the bottom plates (30).
